# EUROPEAN PATENT SPECIFICATION

(11) **EP 4 391 498 B1**
(45) Date of publication and mention of the grant of the patent: **29.07.2026**
(21) Application number: 22864841.6
(22) Date of filing: 30.06.2022
(51) Int. Cl.: H04M 1/02, H04M 1/18, G06F 1/16

(54) **DISPLAY PROTECTION STRUCTURE AND ELECTRONIC DEVICE COMPRISING SAME**
ANZEIGESCHUTZSTRUKTUR UND ELEKTRONISCHE VORRICHTUNG DAMIT
STRUCTURE DE PROTECTION D'AFFICHAGE ET DISPOSITIF ÉLECTRONIQUE LA COMPRENANT

(30) Priority: 03.09.2021 KR 20210117873
(43) Date of publication of application: 26.06.2024
(73) Proprietor: Samsung Electronics Co., Ltd., Suwon-si, Gyeonggi-do 16677 (KR)
(72) Inventor: MOON, Heecheul, Suwon-si Gyeonggi-do 16677 (KR); SON, Kwonho, Suwon-si Gyeonggi-do 16677 (KR)
(74) Representative: Gulde & Partner
(86) International application number: PCT/KR2022/009372
(87) International publication number: WO 2023/033332

(56) References cited:
- EP-A1- 3 745 689
- CN-U- 208 316 809
- KR-A- 20190 001 864
- KR-A- 20200 137 948
- KR-A- 20210 046 488
- KR-A- 20210 047 139
- KR-A- 20210 091 381
- US-A1- 2021 211 530

## Description

### [Technical Field]

Various embodiments disclosed in this document relate to a display protection structure and an electronic device including the same.

### [Background Art]

A mobile electronic device such as a smart phone may provide various functions such as call, video playback, and Internet search based on various types of applications. A user may want to use the various functions described above through a wider screen but portability may deteriorate as the screen becomes greater. Accordingly, a foldable electronic device for enhancing the portability by utilizing a folding structure has been proposed. Foldable electronic devices are disclosed in US 2021 / 211530 A1, EP 3 745 689 A1 and KR 2019 0001864 A.

Since a flexible display needs to fold together with a housing structure, the foldable electronic device may not include a rigid body (e.g., a front window) structure for protecting the display at least in part, unlike a general bar type electronic device. Hence, the display of the foldable electronic device may be fixed to the housing structure with a protection cover (e.g., a polyimide (PI) film) disposed on an upper surface of the display. A periphery of the display may be hidden through a separate decoration member.

However, to provide freedom of the hinge structure according to the folding operation, the decoration member having the rigid property may not be disposed in a region where the electronic device is folded by the hinge structure. Since the periphery of the display is exposed to a disconnection space where the decoration member is not disposed, a foreign substance may enter the corresponding space. The electronic device may include a display protection structure to block or protect the disconnection space from the outside.

### [Disclosure of Invention]

### [Technical Problem]

A protection structure may include a base including a protection cap exposed to outside of an electronic device to protect a folding region (or a folding unit) of a display from external force. If a foldable electronic device performs the folding operation or receives an external impact, the display may be damaged by the protection cap. In addition, if a user performs a touch input (e.g., a swipe operation) on the display region around the protection cap, the user's touch input may be interrupted by the protection cap and accordingly usability of the electronic device may be deteriorated or a user's hand may be injured.

The protection structure may include a blocking member to fill a space between the protection cap and the display. If the foldable electronic device performs the folding operation, the protection cap may be fixed and the blocking member may move the same as the display. Hence, if the foldable electronic device performs the folding operation, a gap may be generated between the protection cap and the blocking member and a foreign substance may penetrate into the gap. The display may be damaged by the penetrated foreign substance.

### [Solution to Problem]

According to the invention, an electronic device according to claim 1 is provided. The electronic device includes: a hinge structure including a hinge housing, as a folding region, a first housing connected to the hinge structure, a second housing connected to the first housing through the hinge structure and configured to rotate with respect to the first housing, a flexible display received in the first housing with a first portion and received in the second housing with a second portion, and at least one protection structure disposed to cover at least a part of a periphery of the flexible display, in the folding region, wherein the at least one protection structure includes: a base disposed on the hinge housing, in the folding region, and including a fixing portion formed in a direction in which a front surface of the electronic device faces, and a blocking member integrally formed with at least a part of the fixing portion, and disposed to cover at least a part of the periphery of the flexible display. The blocking member comprises an elevation formed from one surface of the blocking member toward the front surface of the electronic device, in at least a part of a region where the fixing portion is disposed. The elevation covers the fixing portion.

A protection structure according to various example embodiments of the present disclosure may include: a base including a fixing portion facing a first direction, and a blocking member integrally formed with at least a part of the fixing portion, wherein the blocking member may include a connection portion formed in a region where the fixing portion is disposed, a first extension disposed extending from one end of the connection portion in a second direction, and a second extension extending from the other end of the connection portion in a third direction opposite of the second direction.

### [Advantageous Effects of Invention]

According to various example embodiments, a protection structure may include a base including a fixing portion, and a blocking member integrally formed with at least a part of the fixing portion. Since the fixing portion is not exposed to outside of an electronic device, the protection structure may reduce display damage. In addition, the protection structure may reduce a user's swipe operation from being disturbed. Thus, the protection structure may improve usability of the electronic device.

According to various example embodiments, the blocking member may be integrally formed with at least a part of the fixing portion at a top of the fixing portion. The protection structure may reduce a width of a gap generating between the fixing portion and the blocking member if the foldable electronic device performs a folding operation. Hence, the protection structure may reduce the display damage from a foreign substance introduced into the gap.

Besides, various effects obtained directly or indirectly from this disclosure may be provided.

### [Brief Description of Drawings]

FIG. 1 is a block diagram illustrating an electronic device in a network environment according to an embodiment.
FIG. 2 is a diagram illustrating an unfolded state of a foldable electronic device according to an embodiment.
FIG. 3 is a diagram illustrating a folded state of the foldable electronic device of FIG. 2 according to an embodiment.
FIG. 4 is an exploded perspective view of the foldable electronic device of FIG. 2 according to an embodiment.
FIG. 5 is a diagram illustrating a plan view illustrating an electronic device disposed with a protection structure according to an embodiment.
FIG. 6 is a diagram illustrating a plan view illustrating a protection structure according to an embodiment.
FIG. 7 is a diagram illustrating a plan view illustrating a protection structure and a folded display according to an embodiment.
FIG. 8 is a perspective view illustrating a protection structure and an electronic device disposed with the protection structure according to an embodiment.
FIG. 9 is a perspective view illustrating a protection structure and an electronic device disposed with the protection structure according to another embodiment.
FIG. 10A is a perspective view illustrating coupling of a protection structure and an electronic device according to an embodiment.
FIG. 10B is a diagram illustrating a protection structure based on a folding operation of an electronic device according to an embodiment.
FIG. 11 is a perspective view illustrating a protection structure including a support structure according to an embodiment.
FIG. 12 is a perspective view illustrating a protection structure including a support structure according to another embodiment.
FIG. 13 is a cross-sectional view illustrating an electronic device disposed with a protection structure including a support structure according to an embodiment.

In relation to descriptions of the drawings, like or similar reference numerals may be used for like or similar components.

### DETAILED DESCRIPTION

Hereinafter, various example embodiments of the present disclosure are described with reference to the attached drawings. However, it should be understood that this is not intended to limit the present disclosure to specific embodiments, but to cover various modifications and/or alternatives of the embodiments of the present disclosure.

An electronic device according to various embodiments of the present disclosure may include, for example, and without limitation, at least one of a smartphone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MPEG 3 (MP3) player, a medical equipment, a camera, or a wearable device. According to various embodiments, the wearable device may include, for example, and without limitation, at least one of an accessory type (e.g., a watch, a ring, a bracelet, an anklet, a necklace, glasses, a contact lens, or a head-mounted device (HMD)), a fabric or clothing integrated type (e.g., an electronic clothing), a body-mounted type (e.g., a skin pad or a tattoo), and a bio-implantable type (e.g., an implantable circuit).

In various embodiments, the electronic device may be a smart home appliance. The smart home appliance may include at least one of, for example, a television, a digital video disk (DVD) player, an audio, a refrigerator, an air-conditioner, a cleaner, an oven, a microwave oven, a washing machine, an air cleaner, a set-top box, a home automation control panel, a security control panel, a TV box, a game console, an electronic dictionary, an electronic key, a camcorder, or an electronic frame.

In an embodiment, the electronic device may include at least one of various medical devices (e.g., various portable medical measuring devices (a blood sugar measuring device, a heartbeat measuring device, a blood pressure measuring device, or a body temperature measuring device), magnetic resonance angiography (MRA), magnetic resonance imaging (MRI), computed tomography (CT), a scanning machine, or an ultrasonic wave device), a navigation device, a global navigation satellite system (GNSS), an event data recorder (EDR), a flight data recorder (FDR), a vehicle infotainment device, marine electronic equipment (e.g., a marine navigation device, or a gyro compass), avionics, a security device, an automotive head unit, an industrial or home robot, an automated teller machine (ATM) of a financial institution, a point of sales (POS) of a store, or an Internet of things (IoT) device (e.g., a light bulb, various sensors, an electricity or gas meter, a sprinkler device, a fire alarm, a thermostat, a street light, a toaster, sports equipment, a hot water tank, a heater, a boiler, etc.).

According to various embodiments, the electronic device may include at least one of a unit of furniture or building/construction, an electronic board, an electronic signature receiving device, a projector, or various measuring devices (e.g., water supply, electricity, gas, or electric wave measuring device). In various embodiments, the electronic device may be a combination of one or more of the various devices described above. According to various embodiments, the electronic device may be a flexible electronic device. In addition, an electronic device according to an embodiment the disclosure is not limited to the foregoing devices, and may include a new electronic device according to technological development.

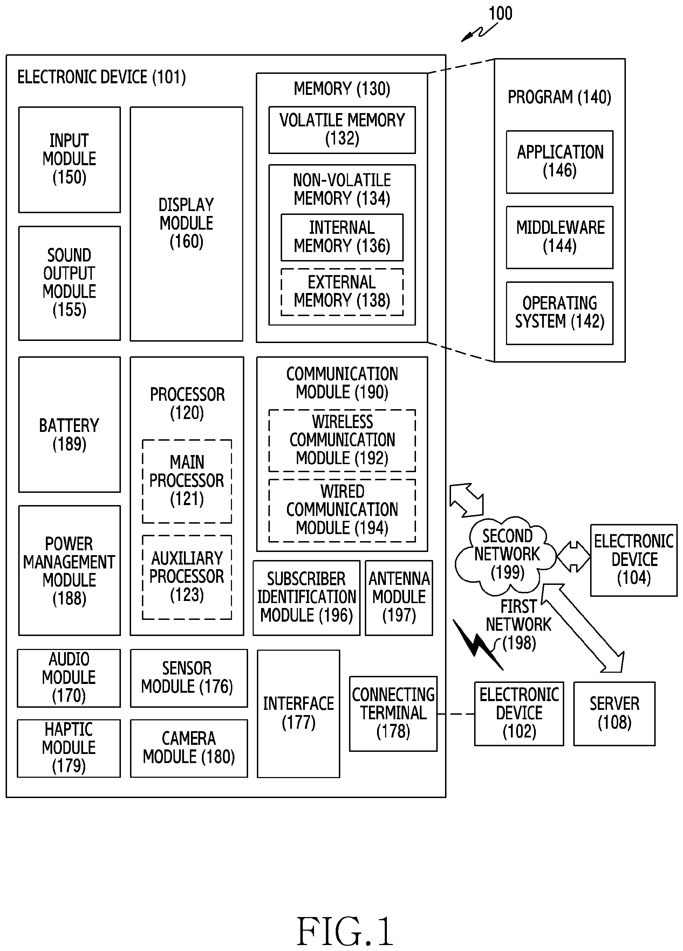

FIG. 1 is a block diagram illustrating an example electronic device 101 in a network environment 100, according to various embodiments. Referring to FIG. 1, the electronic device 101 in the network environment 100 may communicate with an electronic device 102 over a first network 198 (e.g., a short-range wireless communication network), or may communicate with an electronic device 104 or a server 108 over a second network 199 (e.g., a long-range wireless communication network). According to an embodiment, the electronic device 101 may communicate with the electronic device 104 via the server 108. According to an embodiment, the electronic device 101 may include a processor 120, a memory 130, an input device 150, an audio output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In various embodiments, at least one (e.g., the display device 160 or the camera module 180) of the components may be omitted, or one or more other components may be added in the electronic device 101. In various embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may, for example, include various processing circuitry. For example, as used herein, including the claims, the term "processor" may include various processing circuitry, including at least one processor, wherein one or more of at least one processor may be configured to perform various functions described herein. Additionally, the at least one processor may include a combination of processors performing various of the recited /disclosed functions. At least one processor may execute program instructions to achieve or perform various functions. For example, the processor 120 may execute software (e.g., a program 140) to control at least one other component (e.g., a hardware or software component) of the electronic device 101 coupled to the processor 120, and perform various data processing or computation. According to an embodiment, as at least a part of the data processing or computation, the processor 120 may load a command or data received from other component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing device or an application processor), and an auxiliary processor 123 (e.g., a graphics processing device, an image signal processor, a sensor hub processor, or a communication processor) for operating independently from or in conjunction with the main processor 121. Additionally or alternatively, the auxiliary processor 123 may be configured to consume less power than the main processor 121, or to be specific to a specified function. The auxiliary processor 123 may be implemented as separate from, or as a part of the main processor 121.

The auxiliary processor 123 may control at least some of functions or states related to at least one component (e.g., the display device 160, the sensor module 176, or the communication module 190) of the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signaling processor or a communication processor) may be implemented as a part of other component (e.g., the camera module 180 or the communication module 190) functionally related to the auxiliary processor 123 (e.g., the image signal processor or the communication processor).

The memory 130 may store various data used by at least one component (e.g., the processor 120 or the sensor module 176) of the electronic device 101. The data may include, for example, software (e.g., the program 140), and input data or output data for a command related thereto. The memory 130 may include the volatile memory 132 or the non-volatile memory 134.

The program 140 may be stored as software in the memory 130, and may include, for example, an operating system 142, middleware 144 or an application 146.

The input device 150 may receive a command or data to be used by the component (e.g., the processor 120) of the electronic device 101 from the outside (e.g., a user) of the electronic device 101. The input device 150 may include, for example, a microphone, a mouse, a keyboard, or a digital pen (e.g., a stylus pen).

The audio output device 155 may output a sound signal to the outside of the electronic device 101. The audio output device 155 may include, for example, a speaker or a receiver. The speaker may be used for a general purpose such as playing multimedia or playing record, and the receiver may be used to receive an incoming call. According to an embodiment, the receiver may be implemented as separate from, or as a part of the speaker.

The display device 160 may visually provide information to the outside (e.g., a user) of the electronic device 101. The display device 160 may include, for example, a display, a hologram device, or a projector and control circuitry to control a corresponding device. According to an embodiment, the display device 160 may include touch circuitry configured to detect a touch, or sensor circuitry (e.g., a pressure sensor) configured to measure an intensity of force generated by the touch.

The audio module 170 may convert a sound into an electrical signal, or convert an electrical signal into a sound. According to an embodiment, the audio module 170 may obtain the sound via the input device 150, or output the sound via the audio output device 155, or an external electronic device (e.g., an electronic device 102) (e.g., a speaker or a headphone) directly or wirelessly connected with the electronic device 101.

The sensor module 176 may detect an operation state (e.g., a power or a temperature) of the electronic device 101, or an external environment state (e.g., a user state), and generate an electrical signal or a data value corresponding to the detected state. According to an embodiment, the sensor module 176 may include, for example, a gesture sensor, a gyro sensor, a barometric sensor, a magnetic sensor, an acceleration sensor, a grip sensor, a proximity sensor, a color sensor, an IR sensor, a biosensor, a temperature sensor, a humidity sensor, or an illuminance sensor.

The interface 177 may support one or more designated protocols to be used for the electronic device 101 to connect with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connection terminal 178 may include a connector for physically connecting the electronic device 101 with the external electronic device (e.g., the electronic device 102). According to an embodiment, the connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or an electrical stimulus which may be recognized by the user through his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least a part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108), and performing communication via the established communication channel. The communication module 190 may include one or more communication processors which are operated independently from the processor 120 (e.g., the application processor), and supports the direct (e.g., wired) communication or the wireless communication. According to an embodiment, the communication module 190 may include a wireless communication module 192 (e.g., a cellular communication module, a short-range wireless communication module, or a GNSS communication module) or a wired communication module 194 (e.g., a local area network (LAN) communication module, or a power line communication module). A corresponding communication module of these communication modules may communicate with the external electronic device via the first network 198 (e.g., a short-range communication network such as Bluetooth, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various communication modules may be implemented as a single component (e.g., a single chip), or may be implemented as a plurality of separate components (e.g., multiple chips). The wireless communication module 192 may identify and authenticate the electronic device 101 in the communication network such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device). According to an embodiment, the antenna module 197 may include an antenna including a radiator including a conductive material or a conductive pattern formed on a substrate (e.g., a printed circuit board (PCB)). According to an embodiment, the antenna module 197 may include a plurality of antennas. In this case, at least one antenna appropriate for a communication scheme used in the communication network such as the first network 198 or the second network 199 may be selected, for example, by the communication module 190 from the plurality of the antennas. The signal or the power may be transmitted or received between the communication module 190 and the external electronic device via the at least one antenna selected. According to various embodiments, other component (e.g., a radio frequency integrated circuit (RFIC)) than the radiator may be additionally formed as a part of the antenna module 197.

At least some of the components may be connected mutually and exchange signals (e.g., commands or data) therebetween through an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 connected to the second network 199. The electronic devices 102 and 104 each may be a device of the same or different type as or from the electronic device 101. According to an embodiment, all or some of operations executed at the electronic device 101 may be executed at one or more of the external electronic devices 102, 104, and 108. For example, if the electronic device 101 needs to perform a function or a service automatically, or in response to a request from the user or other device, the electronic device 101 may request the one or more external electronic devices to perform at least a part of the function or the service, instead of or in addition to executing the function or the service. The one or more external electronic devices receiving the request may perform the at least a part of the function or the service requested, or an additional function or service related to the request, and provide a result of the execution to the electronic device 101. The electronic device 101 may provide the result as at least a part of a response to the request, without or with further processing of the result. For doing so, for example, a cloud computing, distributed computing, or client-server computing technology may be used.

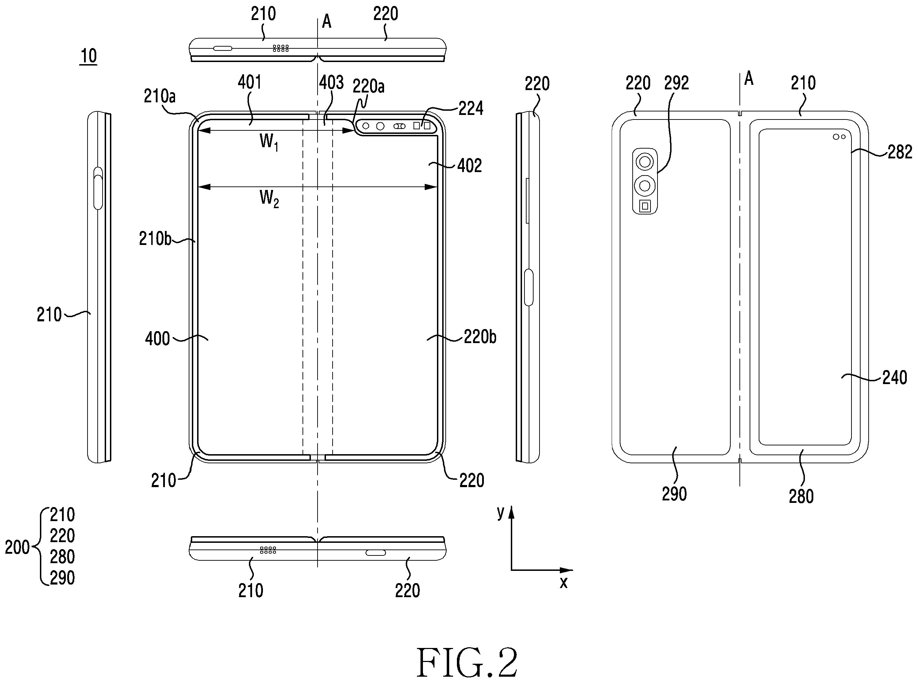

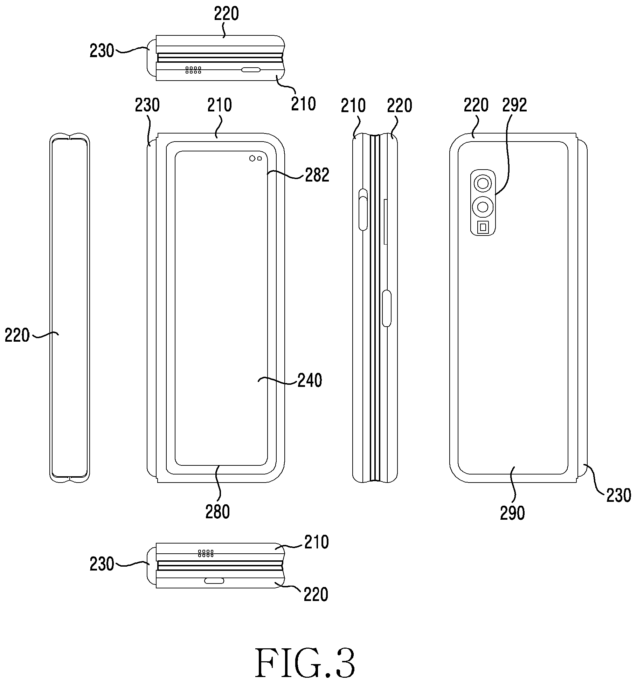

Referring to FIG. 2 and FIG. 3, in an embodiment, the electronic device 10 may include a foldable housing 200, a hinge cover 230 for covering a foldable portion of the foldable housing, and a flexible or foldable display 400 (hereafter, referred to as a "display" 400) disposed in a space formed by the foldable housing 200. This disclosure may refer, for example, to a surface on which the display 400 is disposed as a first surface or a front surface of the electronic device 10. An opposite surface of the front surface is defined as a second surface a rear surface of the electronic device 10. In addition, a surface surrounding the space between the front surface and the rear surface is defined as a third surface or a side surface of the electronic device 10.

In an embodiment, the foldable housing 200 may include a first housing structure 210, a second housing structure 220 including a sensor region 224, a first rear cover 280, and a second rear cover 290. The foldable housing 200 of the electronic device 10 is not limited to the shape and the coupling shown in FIGS. 2 and. 3, and may be implemented by other shape or part coupling and/or combination. For example, in an embodiment, the first housing structure 210 and the first rear cover 280 may be integrally formed, and the second housing structure 220 and the second rear cover 290 may be integrally formed.

In the illustrated embodiment, the first housing structure 210 and the second housing structure 220 may be disposed on both sides based on a folding axis (an axis A), and may have a shape generally symmetrical with respect to the folding axis A. The first housing structure 210 and the second housing structure 220 may differ in angle or distance depending on whether the electronic device 10 is in an unfolded state, a folded state, or an intermediate state, to be described. In the illustrated embodiment, the second housing structure 220 may, unlike the first housing structure 210, further include the sensor region 224 where various sensors are disposed, but may have a mutually symmetrical shape in other region.

In an embodiment, as shown in FIG. 2, the first housing structure 210 and the second housing structure 220 together may form a recess for accommodating the display 400. In the illustrated embodiment, due to the sensor region 224, the recess may have two or more different widths in a direction perpendicular to the folding axis A.

For example, the recess may have (1) a first width w1 between a first portion 210a of the first housing structure 210 parallel to the folding axis A and a first portion 220a of the second housing structure 220 formed at a periphery of the sensor region 224, and (2) a second width w2 formed by a second portion 210b of the first housing structure 210 and a second portion 220b of the second housing structure 220 which does not correspond to the sensor region 224 and is parallel to the folding axis A. In this case, the second width w2 may be formed to be longer than the first width w1. For example, the first portion 210a of the first housing structure 210 and the first portion 220a of the second housing structure 220 having mutually asymmetrical shapes may form the first width w1 of the recess, and the second portion 210b of the first housing structure 210 and the second portion 220b of the second housing structure 220 having mutually symmetrical shapes may form the second width w2 of the recess. In an embodiment, the first portion 220a and the second portion 220b of the second housing structure 220 may have different distances from the folding axis A. The width of the recess is not limited to the illustrated example. In various embodiments, the recess may have a plurality of widths due to the shape of the sensor region 224 or a portion having the asymmetrical shape of the first housing structure 210 and the second housing structure 220.

In an embodiment, at least a part of the first housing structure 210 and the second housing structure 220 may be formed of a metal material or a non-metal material having a rigidity of a size selected to support the display 400.

In an embodiment, the sensor region 224 may be formed to have a specific region adjacent to one corner of the second housing structure 220. However, the arrangement, the shape, and the size of the sensor region 224 are not limited to the illustrated example. For example, in an embodiment, the sensor region 224 may be provided in another corner of the second housing structure 220 or an arbitrary region between an upper corner and a lower corner. In an embodiment, components for performing various functions embedded in the electronic device 10 may be visually exposed on the front surface of the electronic device 10 through the sensor region 224, or through one or more openings provided in the sensor region 224. In various embodiments, the components may include various sensors. The sensor may include, for example, at least one of a front camera, a receiver and a proximity sensor.

The first rear cover 280 may be disposed on one side of the folding axis on the rear surface of the electronic device, may have, for example, a substantially rectangular periphery, and may be surrounded at the periphery by the first housing structure 210. Similarly, the second rear cover 290 may be disposed on the other side of the folding axis on the rear surface of the electronic device, and may be surrounded at the periphery by the second housing structure 220.

In the illustrated embodiment, the first rear cover 280 and the second rear cover 290 may have substantially symmetrical shapes based on the folding axis (the axis A). However, the first rear cover 280 and the second rear cover 290 do not necessarily have the symmetrical shapes, and the electronic device 10 may include the first rear cover 280 and A second rear cover 290 in various shapes, in an embodiment. In an embodiment, the first rear cover 280 may be integrally formed with the first housing structure 210, and the second rear cover 290 may be integrally formed with the second housing structure 220.

In an embodiment, the first rear cover 280, the second rear cover 290, the first housing structure 210, and the second housing structure 220 may form a space for arranging various components (e.g., a printed circuit board, or a battery) of the electronic device 10. In an embodiment, one or more components may be disposed or visually exposed on the rear surface of the electronic device 10. For example, at least a part of a sub display 240 may be visually exposed through a first rear region 282 of the first rear cover 280. In an embodiment, one or more components or sensors may be visually exposed through a second rear region 292 of the second rear cover 290. In various embodiments, the sensor may include a proximity sensor and/or a rear camera.

Referring to FIG. 3, the hinge cover 230 may be disposed between the first housing structure 210 and the second housing structure 220, to cover inner components (e.g., a hinge structure). In an embodiment, the hinge cover 230 may be covered by a part of the first housing structure 210 and the second housing structure 220, or exposed to outside, depending on the state (a flat state or a folded state) of the electronic device 10.

For example, if the electronic device 10 is unfolded as shown in FIG. 2, the hinge cover 230 may be covered by the first housing structure 210 and the second housing structure 220 not to be exposed. For example, if the electronic device 10 is folded (e.g., in a fully folded state) as shown in FIG. 3, the hinge cover 230 may be exposed to the outside between the first housing structure 210 and the second housing the structures 220. For example, if the first housing structure 210 and the second housing structure 220 are in an intermediate state folded with a certain angle, the hinge cover 230 may be exposed in part to the outside between the first housing structure 210 and the second housing the structures 220. However, in this case, the exposed region may be smaller than the completely folded state. In an embodiment, the hinge cover 230 may include a curved surface.

The display 400 may be disposed on the space formed by the foldable housing 200. For example, the display 400 may be received on the recess formed by the foldable housing 200, and may construct most of the front surface of the electronic device 10.

Accordingly, the front surface of the electronic device 10 may include the display 400, a partial region of the first housing structure 210 adj acent to the display 400, and a partial region of the second housing structure 220. The rear surface of the electronic device 10 may include the first rear cover 280, a partial region of the first housing structure 210 adjacent to the first rear cover 280, the second rear cover 290 and a partial region of the second housing structure 220 adjacent to second rear cover 290.

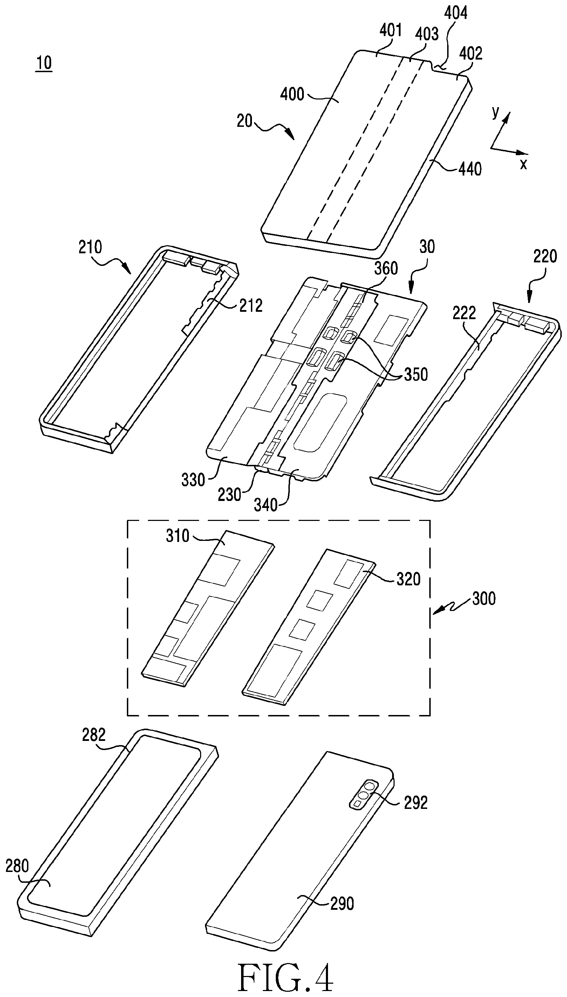

The display 400 may indicate a display which may be changed in at least a part into a flat or curved surface. In an embodiment, the display 400 may include a first region 401 disposed on one side (a left side of the folding region 403 shown in FIGS. 2 and 4) and a second region 402 disposed on the other side (a right side of the folding region 403 shown in FIGS. 2 and 4) based on the folding region 403.

The region division of the display 400 shown in FIG. 2 is an example, and the display 400 may be divided into a plurality of (e.g., four or more or two) regions according to its structure or function. For example, the region of the display 400 may be divided by the folding region 403 extending in parallel to the y axis or the folding axis (the axis A) in the embodiment shown in FIG. 2, but the display 400 may be divided in the region based on another folding region (e.g., a folding region parallel to the x axis) or another folding axis (e.g., a folding axis parallel to the x axis) in an embodiment.

The first region 401 and the second region 402 may have generally symmetrical shapes based on the folding region 403. However, unlike the first region 401, the second region 402 may include a notch which is cut according to the presence of the sensor region 224, but may have a symmetrical shape with the first region 401 in other region. In other words, the first region 401 and the second region 402 may include a portion having the symmetrical shape, and a portion having an asymmetrical shape.

Hereafter, the operations of the first housing structure 210 and the second housing structure 220 and each region of the display 400 based on the state (e.g., the flat state and the folded state) of the electronic device 10 shall be described.

In an embodiment, if the electronic device 10 is in the flat state (e.g., FIG. 2), the first housing structure 210 and the second housing structure 220 may be disposed to form the angle of 180 degrees and to face the same direction. The surface of the first region 401 and the surface of the second region 402 of the display 400 may form 180 degrees to each other, and face the same direction (e.g., a front direction of the electronic device). The folding region 403 may be coplanar with the first region 401 and the second region 402.

In an embodiment, if the electronic device 10 is in the folded state (e.g., FIG. 3), the first housing structure 210 and the second housing structure 220 may be disposed to face each other. The surface of the first region 401 and the surface of the second region 402 of the display 400 may form a narrow angle (e.g., between 0 degrees and 10 degrees), and face each other. At least a part of the folding region 403 may be formed of a curved surface with a specific curvature.

In an embodiment, if the electronic device 10 is in the intermediate state (e.g., FIG. 3), the first housing structure 210 and the second housing structure 220 may be disposed at a certain angle. The surface of the first region 401 and the surface of the second region 402 of the display 400 may form an angle greater than the folded state and smaller than the unfolded state. At least a part of the folding region 403 may be formed of a curved surface with a specific curvature, wherein the curvature may be smaller than the folded state.

FIG. 4 is an exploded perspective view of an electronic device according to an embodiment.

Referring to FIG. 4, in an embodiment, the electronic device 10 may include a display unit (e.g., including a display) 20, a bracket assembly 30, a board unit 300, a first housing structure 210, a second housing structure 220, a first rear cover 280 and a second rear cover 290. In this disclosure, the display unit 20 may be referred to as a display module or a display assembly.

The display unit 20 may include a display 400, and one or more plates or layers 440 on which the display 400 is received. In an embodiment, the plate 440 may be disposed between the display 400 and the bracket assembly 30. The display 400 may be disposed on at least a part of one surface (e.g., an upper surface based on FIG. 4) of the plate 440. The plate 440 may be formed in a shape corresponding to the display 400. For example, some region of the plate 440 may be formed in a shape corresponding to a notch 404 of the display 400.

The bracket assembly 30 may include a first bracket 330, a second bracket 340, a hinge structure disposed between the first bracket 330 and the second bracket 340, a hinge cover 230 for covering the hinge structure if viewed from the outside, and a wiring member 350 (e.g., a flexible circuit board (FPC), a flexible printed circuit) crossing the first bracket 330 and the second bracket 340.

In an embodiment, the bracket assembly 30 may be disposed, between the plate 440 and the board unit 300. For example, the first bracket 330 may be disposed between a first region 401 of the display 400 and a first substrate 310. The second bracket 340 may be disposed between a second region 402 of the display 400 and a second substrate 320.

In an embodiment, the wiring member 350 and at least a part of the hinge structure 360 may be disposed inside the bracket assembly 30. The wiring member 350 may be disposed in a direction (e.g., the x axis direction) crossing the first bracket 330 and the second bracket 340. The wiring member 350 may be disposed in a direction (e.g., the x axis direction) perpendicular to the folding axis (e.g., the y axis or the folding axis A of FIG. 2) of the folding region 403 of the electronic device 10.

As mentioned above, the substrate unit 300 may include the first substrate 310 disposed on the side of the first bracket 330 and the second substrate 320 disposed on the side of the second bracket 340. The first substrate 310 and the second substrate 320 may be disposed in a space formed by the bracket assembly 30, the first housing structure 210, the second housing structure 220, the first rear cover 280 and the second rear cover 290. Components for realizing various functions of the electronic device 10 may be disposed on the first substrate 310 and the second substrate 320.

The first housing structure 210 and the second housing structure 220 may be assembled to each other to be coupled with both sides of the bracket assembly 30, with the display unit 20 coupled to the bracket assembly 30. The first housing structure 210 and the second housing structure 220 may be coupled with the bracket assembly 30 by sliding on both sides of the bracket assembly 30, to be described.

In an embodiment, the first housing structure 210 may include a first rotation support surface 212, and the second housing structure 220 may include a second rotation support surface 222 corresponding to the first rotation support surface 212. The first rotation support surface 212 and the second rotation support surface 222 may include a curved surface corresponding to a curved surface included in the hinge cover 230.

In an embodiment, if the electronic device 10 is in the unfolded state (e.g., the electronic device of FIG. 2), the first rotation support surface 212 and the second rotation support surface 222 may cover the hinge cover 230 such that the hinge cover 230 may not be exposed or may be minimally exposed through the rear surface of the electronic device 10. Meanwhile, if the electronic device 10 is in the folded state (e.g., the electronic device of FIG. 3), the first rotation support surface 212 and the second rotation support surface 222 may rotate along the curved surface included in the hinge cover 230 and the hinge cover 230 may be maximally exposed to the rear surface of the electronic device 10.

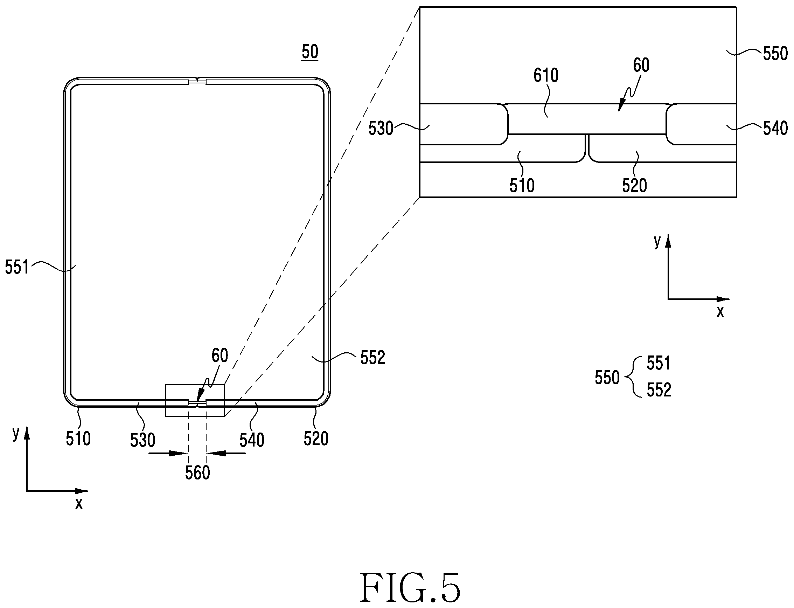

FIG. 5 is a diagram including a plan view illustrating an electronic device 50 disposed with a protection structure 60 according to an embodiment.

The electronic device 50 may be referenced by the electronic device 10 of FIG. 2 through FIG. 4. For example, the electronic device 50 may be at least in part similar to the electronic device 10 of FIG. 2, or may further include other embodiments of the electronic device. Redundant description on the same or substantially the same components as those described above may not be repeated here.

Referring to FIG. 5, the electronic device 50 may include at least one decoration member disposed on the display 550. For example, the at least one decoration member may include a first decoration member 530 disposed on a first portion 551 of the display 550, and a second decoration member 540 disposed on a second portion 552. The display 550 may be disposed such that at least a part of a periphery of the display 550 is not exposed to the outside of the electronic device 50 between at least one decoration member and the housings 510 and 520. For example, at least a part of a periphery of the first portion 551 of the display 550 may not be exposed to the outside of the electronic device 50 between the first decoration member 530 and the first housing 510. At least a part of a periphery of the second portion 552 may not be exposed to the outside of the electronic device 50 between the second decoration member 540 and the second housing 520.

According to an embodiment, the at least one decoration member (e.g., the first decoration member 530) may be omitted in a folding region 560 corresponding to a hinge structure, for the folding operation of the first housing 510 and the second housing 520 based on the hinge structure (e.g., the hinge structure 360 of FIG. 4). In this folding region 560, the electronic device 50 may include at least one protection structure 60 disposed to protect the periphery of the display 550 visually exposed to the outside. At least a part of the periphery of the display 550 may be covered by at least one protection structure 60 not to be exposed to the outside of the electronic device 50. Hence, the protection structure 60 may protect the periphery of the display 550 which is not protected by the decoration members 530 and 540, from external force. In addition, the protection structure 60 may reduce a foreign matter penetrating into the periphery of the display 550 visually exposed to the outside.

According to an embodiment, at least one protection structure 60 may be disposed in the folding region 560 at the bottom of the electronic device 50. However, it is not limited thereto. For example, at least one protection structure 60 may be disposed in a folding region of the top of the electronic device 50 which faces the folding region 560. In an embodiment, the protection structure 60 may be disposed on the upper folding region and the lower folding region 560 of the electronic device 50 respectively.

According to an embodiment, at least one decoration member (e.g., the first decoration member 530) may be formed of a rigid material (e.g., a polymer material or a metal material). However, it is not limited thereto. For example, at least one decoration member may be formed with rubber or silicon. At least one decoration member (e.g., the first decoration member 530) may be disposed through at least one coupling process of bonding, taping, fusion or structural coupling to the housing (e.g., the first housing 510). However, it is not limited thereto.

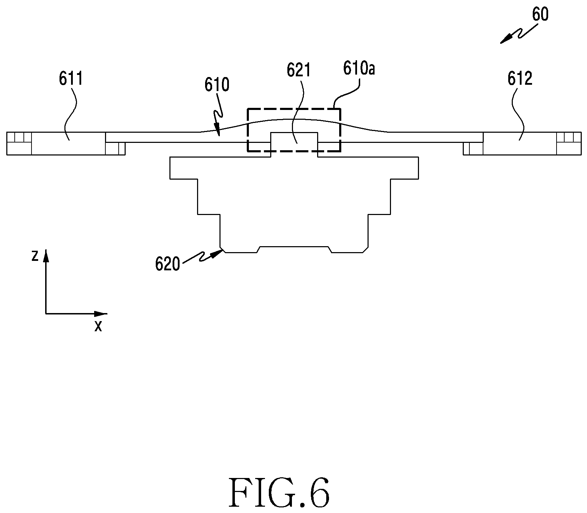

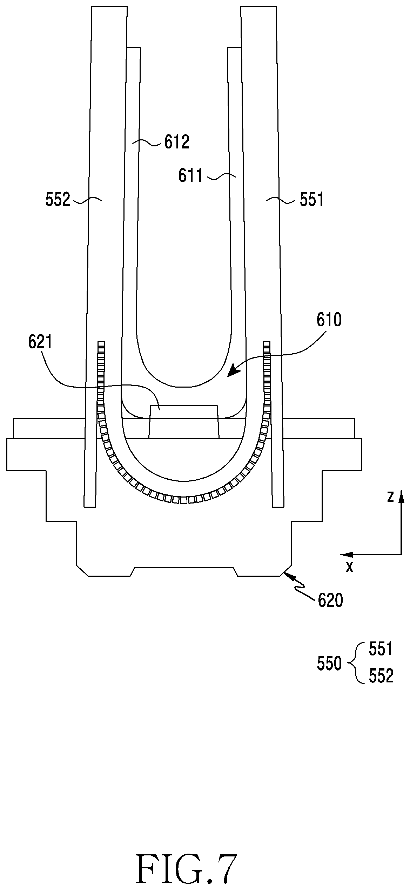

FIG. 6 is a diagram including a plan view illustrating a protection structure 60 according to an embodiment. FIG. 7 is a diagram including a plan view illustrating a protection structure 60 and a folded display 550 according to an embodiment.

Referring to FIG. 6 and FIG. 7, the protection structure 60 according to an embodiment may include a base 620 including a fixing portion 621, and a blocking member 610 coupled to at least a part of the fixing portion 621. According to an embodiment, the fixing portion 621 may include a shape of a protrusion which faces a first direction (e.g., the +z axis direction). If the fixing portion 621 includes the protrusion, the base 620 may be coupled with the blocking member 610 to contain at least a part of the protrusion of the fixing portion 621. However, it is not limited thereto. For example, the protection structure 60 may include a protrusion (not shown) protruding from the blocking member 610 toward the fixing portion 621. In this case, at least a part of the protruding unit of the blocking member 610 may be contained in the base 620. At least a part of the fixing portion 621 may be contained in the blocking member 610 and not exposed to the outside. At least a part of the fixing portion 621 is contained in the blocking member 610 and is not exposed to the outside, and accordingly, if the user performs a swipe operation on the display 550, the fixing portion 621 may reduce a user's finger or an input device getting caught in the fixing portion. Thus, usability of the electronic device may be improved. According to an embodiment, the first direction may indicate a direction in which the front surface of the electronic device (e.g., the electronic device 50 of FIG. 5) faces. The front surface of the electronic device may indicate a surface on which a main display (e.g., the display 550) of the electronic device is disposed. However, it is not limited thereto.

According to an embodiment, the base 620 may include at least one of metal or plastic. For example, the base 620 may include polycarbonate (PC). However, it is not limited thereto. For example, the base 620 may include a rigid body of various materials. Hence, the base 620 may protect the display 550 from external impact. In addition, the base 620 may secure the protection structure 60 to the hinge housing (230 in FIG. 4).

According to an embodiment, the blocking member 610 may include a polymer material such as rubber or silicone. For example, the blocking member 610 may include polyurethane (PU). However, it is not limited thereto. For example, the blocking member 610 may include an elastic body of various materials allowing bending. In another example, the blocking member 610 may be formed of a metal member such as stainless steel (SUS) or aluminum (AI), as a thin film member. In an embodiment, the blocking member may include a polymer material such as polyethylene terephthalate (PET), PU, or thermoplastic polyurethane (TPU), a thin film member. The blocking member 610 may serve as a shock absorber for the display 550 for mitigating external impact.

According to an embodiment, the blocking member 610 may be integrally formed with at least a part of the fixing portion 621. For example, the blocking member 610 may be integrally coupled with at least a part of the fixing portion 621 through insert injection. The blocking member 610 may be integrally formed with at least a part of the fixing portion 621, and a gap width generating between the blocking member 610 and the fixing portion 621 may be reduced by the bending of the blocking member 610 if the electronic device performs the folding operation. Hence, the protection structure 60 may reduce penetration of a foreign substance outside the electronic device into the gap.

According to an embodiment, the blocking member 610 may include a connection portion 610a formed in a region containing at least a part of the fixing portion 621, a first extension unit 611 extending from one end of the connection portion 610a in a second direction (the -x axis direction), and a second extension unit 612 extending from one end of the connection part 610a in a third direction (the +x axis direction). At least a part of the connection portion 610a may bend. Referring to FIG. 7, the first extension unit 611 may face at least a part of the periphery of the first portion 551 of the display 550, and the second extension unit 612 may face at least a part of the periphery of the second portion 552 of the display 550. Hence, if the electronic device performs the folding operation, at least a part of the connection portion 610a may move together with the display 550. According to the movement of the display 550 based on the folding operation of the housing, at least a part of the connection portion 610a may be bent.

According to an embodiment, the connection portion 610a of the blocking member 610 may be a portion where the fixing portion 621 of the base 620 is disposed. For example, the connection portion 610a of the blocking member 610 may be formed to be concave and disposed in the fixing portion 621 of the base 620. As another example, the connection portion 610a of the blocking member 610 may be convexly formed and disposed on the base 620.

Referring to FIG. 7, with the protection structure according to an embodiment coupled to the electronic device, the fixing portion 621 may be disposed in a region corresponding to a folding axis FX of the display 550. The fixing portion 621 may support at least a part of the periphery of the display 550, in the region.

By arranging the blocking member 610 in the folded state of the electronic device as shown in FIG. 7, the gap size generating if the blocking member 610 is folded may be reduced.

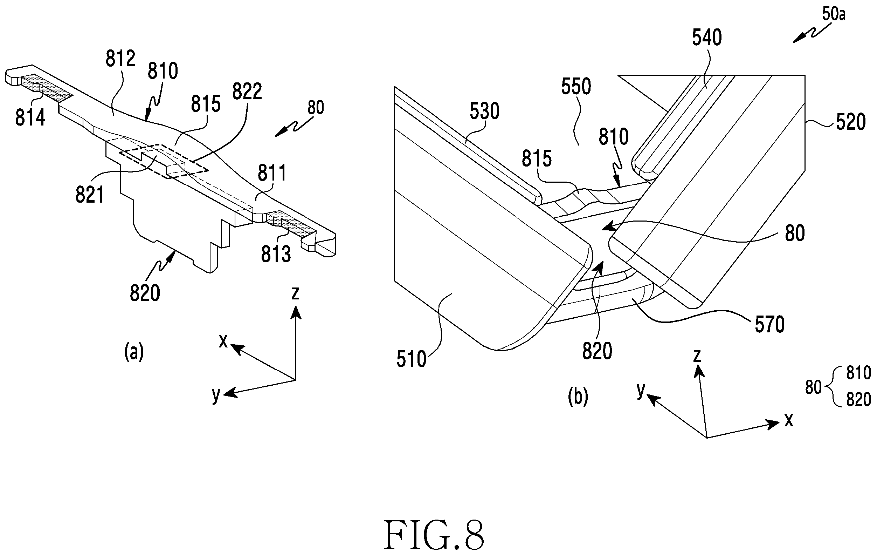

FIG. 8 is a perspective view illustrating a protection structure 80 and an electronic device 50a disposed with the protection structure 80 according to an embodiment.

The electronic device 50a may be referenced by the electronic device 10 of FIG. 2 through FIG. 4. The protection structure 80 may be referenced by the protection structure 60 of FIG. 6 and FIG. 7. Redundant description on the same or substantially the same components as those described above may not be repeated here.

Referring to (a) of FIG. 8, the protection structure 80 according to an embodiment may include a base 820 including a fixing portion 821, and a blocking member 810 integrally formed with at least a part of the fixing portion 821. The fixing portion 821 may protrude in a direction (e.g., the +z axis direction) which the front surface of the electronic device 50a faces. According to this embodiment, one end of the fixing portion 821 may include a plate unit 822 which protrudes in a direction (e.g., the +y axis direction) toward the inside of the electronic device 50a. The blocking member 810 may be disposed to cover an upper surface of the plate unit 822.

According to an embodiment, a thickness of the blocking member 810 may differ depending on the region of the blocking member 810. The blocking member 810 includes an elevation 815 formed in at least a part of the region containing at least a part of the fixing portion 821. The elevation 815 may protrude from one surface of the blocking member 810 in a direction (e.g., the +z axis direction) in which the fixing portion 821 is formed. According to an embodiment, the blocking member 810 may be formed to be curved from the elevation 815 to one surface of the blocking member 810. For example, the blocking member 810 may be seamlessly formed from the elevation 815 to a first extension unit 811 and a second extension unit 812. The elevation 815 may include a curved surface whose height gradually decreases from the center having a high height from a display surface of the unfolded state toward the extension unit (e.g., the first extension unit 611 or the second extension unit 612).

According to an embodiment, the blocking member 810 may include at least one receiving structure. For example, the blocking member 810 may include at least one groove in at least a part of a periphery of the blocking member 810 in a longitudinal direction (e.g., the x axis direction). Referring to (a) of FIG. 8, the first extension unit 811 may include a first groove 813 concavely formed at the longitudinal edge of the blocking member 810. The second extension unit 812 may include a second groove 814 concavely formed at the longitudinal edge of the blocking member 810. According to an embodiment, the first groove 813 and the second groove 814 may be formed symmetrically based on the elevation 815. However, it is not limited thereto.

Referring to (b) of FIG. 8, the protection structure 80 according to an embodiment may be disposed in the electronic device 50a. For example, the protection structure 80 may be disposed in a hinge housing 570. The protection structure 80 may be disposed such that the blocking member 810 faces the front surface of the electronic device 50a (in the +z axis direction), and the base 820 faces a lower side surface of the electronic device 50a (in the -y axis direction). Hence, the elevation 815 of the blocking member 810 may protrude in a direction which the front surface of the electronic device 50a faces.

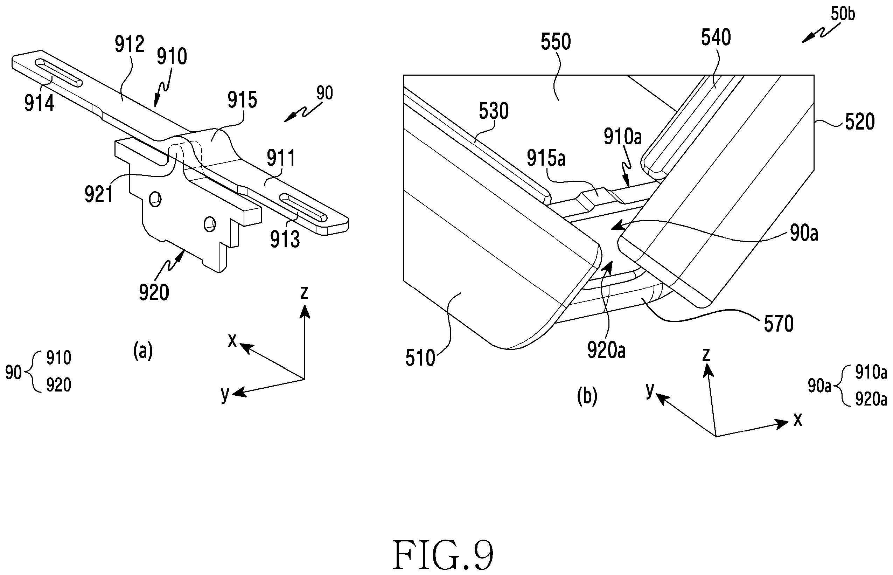

FIG. 9 is a perspective view illustrating a protection structure 90 and an electronic device 50b disposed with the protection structure 90 according to various embodiments.

The electronic device 50b may be referenced by the electronic device 10 of FIG. 2 through FIG. 4. The protection structure 90 may be referenced by the protection structure 60 of FIG. 6 and FIG. 7. Redundant description on the same or substantially the same components as those described above may not be repeated.

Referring to (a) of FIG. 9, the protection structure 90 according to an embodiment may include a base 920 including a fixing portion 921, and a block member 910 integrally formed with at least a part of the fixing portion 921. The fixing portion 921 may protrude in a direction which the front surface of the electronic device 50b faces (e.g., the +z axis direction). One end of the fixing portion 921 may include a curved shape.

According to an embodiment, the thickness of the blocking member 910 may differ according to a region of the blocking member 910. The blocking member 910 includes an elevation 915 formed in at least a part of the region containing at least a part of the fixing portion 921. The elevation 915 may protrude from one surface of the blocking member 910 in a direction in which the fixing portion 921 protrudes (e.g., the +z axis direction).

According to an embodiment, the blocking member 910 may be formed to be curved from the elevation 915 to one surface of the blocking member 910. For example, the blocking member 910 may be formed seamlessly from the elevation 915 to a first extension unit 911 and a second extension unit 912. However, it is not limited thereto. For example, referring to (b) of FIG. 9, the elevation 915a may form a step with one surface of the blocking member 910a. An upper surface of the elevation 915a may include a planar shape. At least a part of a side surface of the elevation 915a may include an inclined surface which forms an inclined angle with one surface of the blocking member 910a. For example, a cross section of the elevation 915a may include a trapezoidal shape.

According to an embodiment, the blocking member 910 may include at least one receiving structure. For example, the blocking member 910 may include at least one opening formed in a direction in which the fixing portion 921 is formed (or in a direction which the front surface of the electronic device 50b faces (e.g., +z axis direction)). Referring to (a) of FIG. 9, the first extension unit 911 may include a first opening 913 formed in a direction in which the fixing portion 921 is formed. The second extension unit 912 may include a second opening 914 formed in a direction in which the fixing portion 921 is formed.

According to an embodiment, the blocking member 910 may be coupled to a housing by the receiving structure. For example, the first opening 913 may be coupled to the first housing 510, and the second opening 914 may be coupled to the second housing 520.

Referring to (b) of FIG. 9, the protection structure 90 or 90a according to an embodiment may be disposed in the electronic device 50b. For example, the protection structure 90 or 90a may be disposed in the hinge housing 570. The protection structure 90 or 90a may be disposed such that the blocking member 910 or 910a faces the front surface of the electronic device 50b (in the +z axis direction), and the base 920 or 920a faces a lower side surface of the electronic device 50b (in the -y axis direction). Hence, the elevation 915 or 915a of the blocking member 910 or 910a may protrude in a direction which the front surface of the electronic device 50b faces.

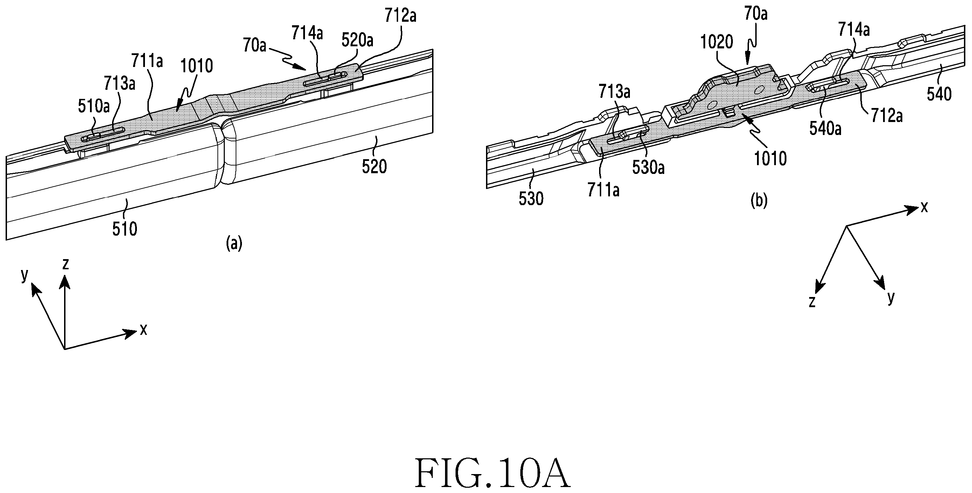

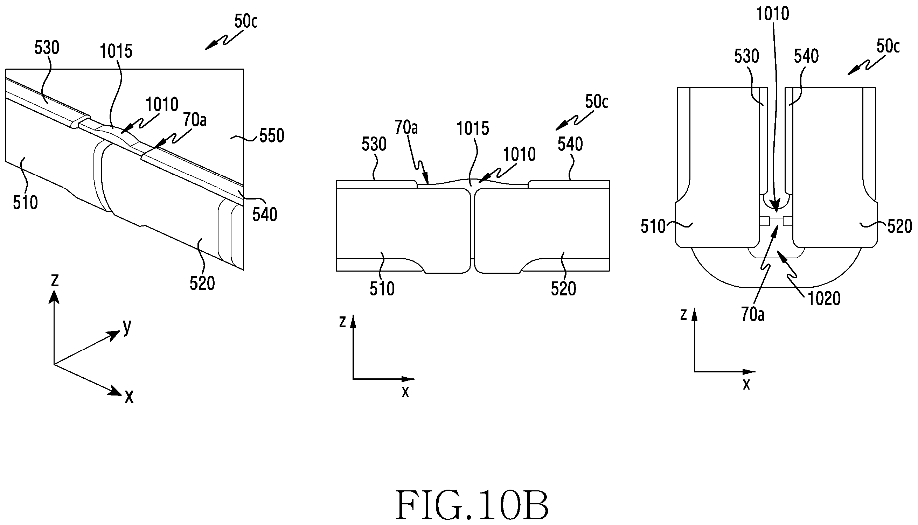

FIG. 10A is a perspective view illustrating coupling of a protection structure 70a and an electronic device 50c according to an embodiment. FIG. 10B includes diagrams illustrating the protection structure 70a based on an operation of the electronic device 50c according to an embodiment.

The electronic device 50c may be referenced by the electronic device 10 of FIG. 2 through FIG. 4, the electronic device 50a of FIG. 8, and the electronic device 50b of FIG. 9. The protection structure 70a may be referenced by the protection structure 60 of FIG. 6, the protection structure 80 of FIG. 8, and the protection structure 90 of FIG. 9. Redundant descriptions on the same or substantially the same components as those described above may not be repeated here.

Referring to FIG. 10A, the protection structure 70a according to an embodiment may be coupled with the electronic device 50c. For example, referring to (a) of FIG. 10A, a blocking member 1010 may be coupled with a housing by a receiving structure. For example, a first groove 713a may be coupled to a first protrusion unit 510a provided on a first housing 510, and a second groove 714a may be coupled to a second protrusion unit 520a provided in a second housing 520.

According to an embodiment, the first protrusion unit 510a may be disposed to pass through the first groove 713a, and the second protrusion unit 520a may be disposed to pass through the second groove 714a. If the electronic device performs the folding or unfolding operation, the first protrusion unit 510a and the second protrusion unit 520a may move along the first groove 713a and the second groove 714a respectively. Hence, the coupling structure may relieve stress concentrated on the blocking member 1010. In addition, the coupling structure may prevent and/or reduce the blocking member 1010 from separating from the electronic device.

According to an embodiment, referring to (b) of FIG. 10A, the blocking member 810 may be coupled with a decoration member by the receiving structure. For example, the first groove 713a may be coupled to the first protrusion unit 530a provided in the first decoration member 530, and the second groove 714a may be coupled to the second protrusion unit 540a provided in the second decoration member 540.

According to an embodiment, the first protrusion unit 530a may be disposed to pass through the first groove 713a, and the second protrusion unit 540a may be disposed to pass through the second groove 714a. If the electronic device performs the folding or unfolding operation, the first protrusion unit 530a and the second protrusion unit 540a may move along the first groove 713a and the second groove 714a respectively. Thus, the coupling structure may relieve stress concentrated on the blocking member 1010. In addition, the coupling structure may prevent and/or reduce the blocking member 1010 from separating from the electronic device. Referring to FIG. 10B, the protection structure 70a according to an embodiment may be disposed in the electronic device 50c. For example, the protection structure 70a may be disposed in the hinge housing 570. A base 1020 of the protection structure 70a may be exposed to the outside of the electronic device 50c, while the electronic device 50c operates. For example, if the electronic device 50c is unfolded (e.g., the electronic device 10 of FIG. 2), the base 1020 may not be exposed to the outside by the first housing 510 and the second housing 520. If the electronic device 50c is folded (e.g., the electronic device 10 of FIG. 3), the base 1020 may be exposed to the outside of the electronic device 50c. The base 1020 may be exposed to the outside of the electronic device 50c, if the electronic device 50c operates, for example, if the electronic device 50c operates from the unfolded state to the folded state.

According to an embodiment, at least one decoration member may be disposed to cover at least a part of the blocking member 1010. For example, a first decoration member 530 may be disposed to cover at least a part of the first extension unit (e.g., 911 in FIG. 9) of the blocking member 1010, and the second decoration member 540 may be disposed to cover at least a part of the second extension unit (e.g., 912 of FIG. 9) of the blocking member 1010.

According to an embodiment, the blocking member 1010 may differ in thickness depending on the region of the blocking member 1010. For example, the thickness of the blocking member 1010 may gradually decrease from the elevation 1015 toward the first extension unit (e.g., 911 in FIG. 9) or from the elevation 1015 toward the second extension unit (e.g., 912 in FIG. 9). Referring to FIG. 10B, the thickness of the blocking member 1010 may decrease from the elevation 1015 toward the first decoration member 530 or the second decoration member 540. Hence, as the electronic device 50c is folded, the blocking member 1010 may be easily bent.

According to an embodiment, one point of the blocking member 1010 may be disposed on the substantially same line as one point of the at least one decoration member 530 or 540 based on the display surface. For example, a high point of the elevation 1015 of the blocking member 1010 may be formed on a high surface of the first decoration member 530, or on an extension line of the high surface of the second decoration member 540.

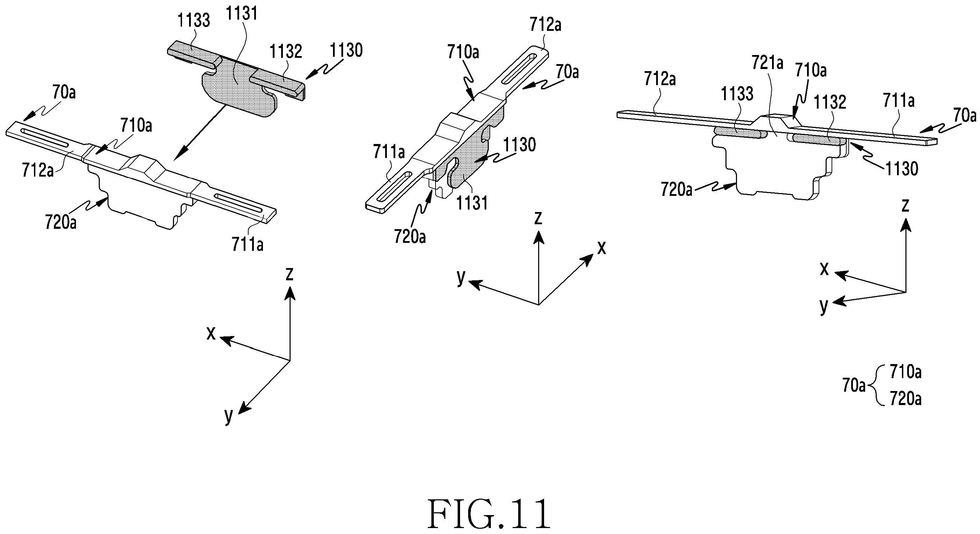

FIG. 11 is a perspective view illustrating a protection structure 70a including a support structure 1130 according to an embodiment.

The protection structure 70a may be referenced by the protection structure 60 of FIG. 6, the protection structure 80 of FIG. 8, and the protection structure 90 of FIG. 9. Redundant descriptions on the same or substantially the same components as those described above may not be repeated here.

Referring to FIG. 11, the protection structure 70a according to an embodiment may further include the support structure 1130. The support structure 1130 may include a plate unit 1131 facing one surface of a base 720a, and at least one support unit 1132 or 1133 disposed between the base 720a and a blocking member 710a.

According to an embodiment, the at least one support unit may include a first support unit 1132 and a second support unit 1133. The first support unit 1132 and the second support unit 1133 may protrude from an upper end of the plate unit 1131 in one direction (e.g., the +y axis direction). The first support unit 1132 and the second support unit 1133 may be spaced apart to form a space therebetween. At least one surface of the first support unit 1132 and the second support unit 1133 may include a plane. For example, upper surfaces of the first support unit 1132 and the second support unit 1133 may include a plane.

According to an embodiment, the plate unit 1131 may be formed to correspond to one surface of the base 720a. For example, the plate unit 1131 may include a concave shape between a side edge of the plate unit 1131 and the at least one support unit 1132 and 1133. At least a part of the periphery of the plate unit 1131 may include a curved surface.

According to an embodiment, the support structure 1130 may support at least a part of the blocking member 710a. For example, at least one support unit may be disposed between the base 720a and the blocking member 710a, to support at least a part of the blocking member 710a. At least one support unit may be disposed in a space between the base 720a formed on one side of the fixing portion 721a and the blocking member 710a. For example, the fixing portion 721a may be disposed in a space formed between the first support unit 1132 and the second support unit 1133 by separating the first support unit 1132 and the second support unit 1133. According to an embodiment, the first support unit 1132 may be disposed between the base 720a and at least a part of the first extension unit 711a. The first support unit 1132 may be disposed between the base 720a and at least a part of the first extension unit 711a, to support at least a part of the first extension unit 711a. The second support unit 1133 may be disposed between the base 720a and at least a part of the second extension unit 712a. The second support unit 1133 may be disposed between the base 720a and at least a part of the second extension unit 712a, to support at least a part of the second extension unit 712a. The support structure 1130 may be supported by the base 720a, by including the first support unit 1132 and a second support unit 1133.

According to an embodiment, the support structure 1130 may be supported by a hinge housing (e.g., 570 in FIG. 9). For example, the support structure 1130 may further include an additional support unit disposed between the hinge housing (570 in FIG. 9) and the blocking member 710a, and supporting at least a part of the first support unit 1132 and the second support unit 1133 by the hinge housing. For example, the additional support unit may include a structure extending from one end of the first support unit 1132 and the second support unit 1133, and protruding in a direction (e.g., -z axis direction) toward the hinge housing. The protruding structure may face the hinge housing, to support the support structure 1130. Since the support structure 1130 includes at least one additional support unit, the additional support unit may prevent and/or reduce the first support unit 1132 and the second support unit 1133 from sagging.

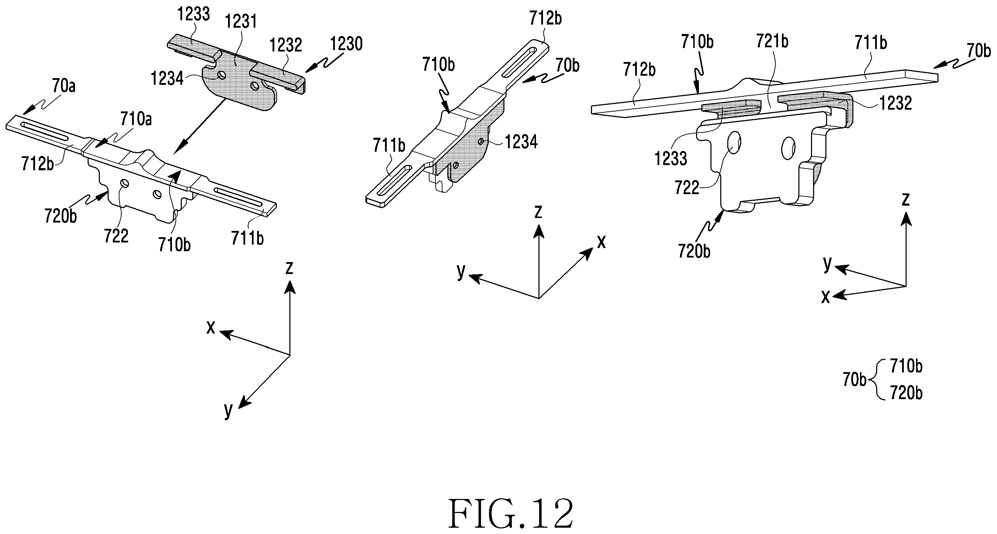

FIG. 12 is a perspective view illustrating a protection structure 70b including a support structure 1230 according to another embodiment.

The protection structure 70b may be referenced by the protection structure 60 of FIG. 6, the protection structure 80 of FIG. 8, and the protection structure 90 of FIG. 9. Redundant descriptions on the same or substantially the same components as those described above may not be repeated here.

Referring to FIG. 12, the protection structure 70b may further include a support structure 1230 according to an embodiment. The support structure 1230 may include a plate unit 1231 facing one surface of a base 720b, and at least one support unit 1232 and 1233 disposed between the base 720b and the blocking member 710b.

According to an embodiment, the at least one support unit may include a first support unit 1232 and a second support unit 1233. The first support unit 1232 and the second support unit 1233 may protrude from an upper end of the plate unit 1231 in one direction (e.g., the +y axis direction). The first support unit 1232 and the second support unit 1233 may be spaced apart to form a space therebetween. At least one surface of the first support unit 1232 and the second support unit 1233 may include a plane. For example, upper surfaces of the first support unit 1232 and the second support unit 1233 may include a plane.

According to an embodiment, the plate unit 1131 may include at least one opening 1234. The base 720b may include at least one opening 722. The at least one opening 1234 of the plate unit 1131 may correspond to at least one opening 722 of the base 720b.

According to an embodiment, the support structure 1230 may support at least a part of the blocking member 710b. For example, at least one support unit may be disposed between the base 720b and the blocking member 710b, to support at least a part of the blocking member 710b. At least one support unit may be disposed in a space between the base 720b formed on one side surface of the fixing portion 721b and the blocking member 710b. For example, the fixing portion 721b may be disposed in the space formed between the first support unit 1232 and the second support unit 1233 by separating the first support unit 1232 and the second support unit 1233. According to an embodiment, the first support unit 1232 may be disposed between the base 720b and at least a part of the first extension unit 711b. The first support unit 1232 may be disposed between the base 720b and at least a part of the first extension unit 711b, to support at least a part of the first extension unit 711b. The second support unit 1233 may be disposed between the base 720b and at least a part of the second extension unit 712b. The second support unit 1233 may be disposed between the base 720b and at least a part of the second extension unit 712b, to support at least a part of the second extension unit 712b. The support structure 1230 may be supported by the base 720b, by including the first support unit 1232 and the second support unit 1233.

According to an embodiment, the support structure 1230 may be supported by a hinge housing (e.g., 570 in FIG. 9). For example, the support structure 1230 may further include an additional support disposed between the hinge housing (570 in FIG. 9) and the blocking member 710b, and supporting at least a part of the first support unit 1232 and the second support unit 1233 by the hinge housing. For example, the additional support unit may include a structure extending from one end of the first support unit 1232 and the second support unit 1233, and protruding in a direction (e.g., the -z axis direction) toward the hinge housing. The protruding structure may face the hinge housing, to support the support structure 1230. Since the support structure 1230 includes at least one additional support unit, the additional support unit may prevent and/or reduce the first support unit 1232 and the second support unit 1233 from sagging.

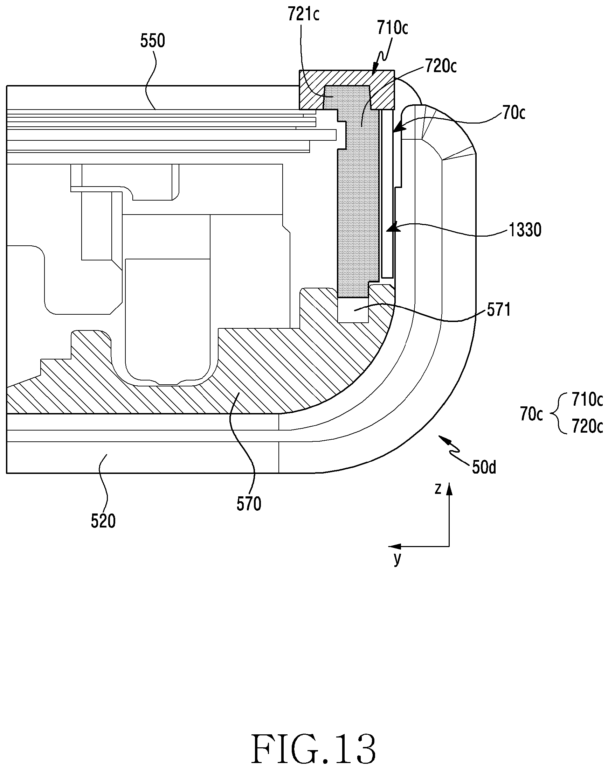

FIG. 13 is a partial cross-sectional view illustrating an electronic device 50c disposed with a protection structure 70c including a support structure 1330 according to an embodiment.

The electronic device 50c may be referenced by the electronic device 10 of FIG. 2 through FIG. 4, the electronic device 50 of FIG. 5, the electronic device 50a of FIG. 8 or the electronic device 50b of FIG. 9. The protection structure 70c may be referenced by the protection structure 80 of FIG. 8 or the protection structure 90 of FIG. 9. The support structure 1330 may be referenced by the support structure 1130 of FIG. 11 or the support structure 1230 of FIG. 12. Redundant descriptions on the same or substantially the same components as those described above may not be repeated here.

According to an embodiment, a manufacturing process of the electronic device 50d may include a display attaching process, a protection structure assembling process, and a first decoration member and second decoration member attaching process. In the display attaching process, the display 550 may be attached to the electronic device 50d.

According to an embodiment, in the protection structure assembling process, the protection structure 70c may be disposed such that at least a part of a periphery of the display 550 is covered by at least a part of the blocking member 710c containing a fixing portion 721c. According to an embodiment, at least a part of the blocking member 710c may be coupled to the display 550 through at least one of a bonding, taping, or fusion process. However, it is not limited thereto. For example, the blocking member may not be attached to the display. Referring to FIG. 13, the protection structure 70c may be disposed in the hinge housing 570. The hinge housing 570 may include a groove 571 for receiving the protection structure 70c. The protection structure 70c may be secured, by inserting a lower end into the groove 571. According to an embodiment, the protection structure 70c may further include a support structure 1330. The support structure 1330 may face one surface of the base 720c of the protection structure 70c. The support structure 1330 may face one surface which is disposed in a direction (e.g., the -y axis direction) toward the outside of the electronic device 50c in one surface of the base 720c. According to an embodiment, the support structure 1330 may be coupled to the protection structure 70c through at least one process of bonding, taping, or fusing. But it is not limited thereto.

According to an embodiment, in the first decoration member and second decoration member attaching process, the first decoration member and the second decoration member may be disposed to cover at least a part of the periphery of the display 550. The first decoration member and the second decoration member may be disposed to cover at least a part of the blocking member 710c.

As stated above, an electronic device (e.g., the electronic device 10 of FIG. 2) according to an example embodiment, may include: a hinge structure including a hinge housing, including a folding region, a first housing connected to the hinge structure, a second housing connected to the first housing through the hinge structure and configured to rotate with respect to the first housing, a flexible display disposed in the first housing with a first portion and disposed in the second housing with a second portion, and at least one protection structure disposed to cover at least a part of a periphery of the flexible display, in the folding region, wherein the at least one protection structure may include a base comprising a rigid body disposed on the hinge housing, in the folding region, and including a fixing portion comprising a protrusion formed in a direction in which a front surface of the electronic device faces, and a blocking member integrally formed with at least a part of the fixing portion, and disposed to cover at least a part of the periphery of the flexible display.

According to an example embodiment, the fixing portion may be disposed to support the flexible display, in at least a part of the periphery of a folding axis region of the flexible display.

According to an example embodiment, the fixing portion may include a protrusion protruding in the direction which the front surface of the electronic device faces, and contained at least in part in the blocking member, and the blocking member may include a connection portion comprising an elastic material including a region containing at least a part of the protrusion, a first extension disposed to cover at least a part of an edge of the first portion, and extending from one end of the connection portion, and a second extension disposed to cover at least a part of an edge of the second portion, and extending from an other end of the connection portion.

According to an example embodiment, the blocking member may include at least one opening formed in a direction which the front surface of the electronic device faces.

According to an example embodiment, the blocking member may include at least one groove concavely formed with at least a part of a longitudinal edge of the blocking member.

According to an example embodiment, the protection structure may further include a plate disposed to face one surface of the base, and a support structure including at least one support disposed to support at least a part of the blocking member between the base and the blocking member.

According to an example embodiment, the at least one support may be disposed in a space between the base formed on one surface of the fixing portion and the blocking member.

The blocking member includes an elevation formed from one surface of the blocking member toward the front surface of the electronic device, in at least a part of a region where the fixing portion is disposed.

According to an example embodiment, the blocking member may be curved from the elevation to the one surface of the blocking member.

According to an example embodiment, the electronic device may include a first frame disposed on at least a part of the edge of the first portion along the periphery of the first portion, in the first housing, and a second frame disposed on at least a part of the edge of the second portion along the edge of the second portion, in the second housing.

According to an example embodiment, the first frame and the second frame may be disposed to cover at least a part of the blocking member.

According to an example embodiment, the at least one protection structure may integrally couple at least a part of the fixing portion of the base with the blocking member through insert injection.

As stated above, the protection structure (e.g., the protection structure 60 of FIG. 6) according to an example embodiment may include a base comprising a rigid body including a fixing portion comprising a protrusion facing a first direction, and a blocking member comprising an elastic body integrally formed with at least a part of the fixing part, wherein the blocking member may include a connection portion comprising an elastic material formed in a region where the fixing portion is disposed, a first extension extending from one end of the connection portion in a second direction, and a second extension extending from an other end of the connection portion in a third direction opposite to the second direction.

According to an example embodiment, the fixing portion may include a protrusion protruding in the first direction and contained at least in part in the blocking member, and the blocking member may include at least one opening formed in a direction which the front surface of the electronic device faces.

According to an example embodiment, the blocking member may include at least one groove concavely formed with at least a part of a longitudinal edge of the blocking member.

According to an example embodiment, the protection structure may further include a plate disposed to face one surface of the base, and a support structure including at least one support disposed to support at least a part of the blocking member between the base and the blocking member.

According to an example embodiment, the at least one support may be disposed in a space between the base formed on one surface of the fixing portion and the blocking member.

According to an example embodiment, the fixing portion may include a protrusion protruding in the first direction and contained at least in part in the blocking member, and the blocking member includes an elevation formed from one surface of the blocking member in a direction in which the protrusion unit is formed, in at least a part of the region containing at least a part of the fixing portion.

According to an example embodiment, the blocking member may be curved from the elevation to the one surface of the blocking member.

According to an example embodiment, at least a part of the fixing portion of the base may be integrally formed with the blocking member through insert injection.

While the disclosure has been illustrated and described with reference to various example embodiments, it will be understood that the various example embodiments are intended to be illustrative, not limiting. It will be further understood by those skilled in the art that various changes in form and detail may be made without departing from the full scope of the disclosure, including the appended claims. It will also be understood that any of the embodiment(s) described herein may be used in conjunction with any other embodiment(s) described herein.

## Claims

1. An electronic device (10, 50, 50a, 50b, 50c, 101) comprising:
a hinge structure comprising a hinge housing (570);
a first housing (510) connected to the hinge structure;
a second housing (520) connected to the first housing (510) through the hinge structure and configured to rotate with respect to the first housing (510);
a flexible display (400, 550) disposed in the first housing (510) with a first portion (210a, 220a, 551) and disposed in the second housing (520) with a second portion (210b, 220b, 552); and
at least one protection structure (60, 70a, 70b, 70c, 80, 90) disposed to cover at least a part of a periphery of the flexible display (400, 550),
wherein the at least one protection structure (60, 70a, 70b, 70c, 80, 90) comprises:
a base (620, 720a, 820, 920) disposed on the hinge housing (570) and comprising a fixing portion (621, 821, 921) formed in a direction in which a front surface of the electronic device (10, 50, 50a, 50b, 50c, 101) faces; and
a blocking member (610, 810, 910) integrally formed with at least a part of the fixing portion (621, 821, 921), and disposed to cover at least a part of the periphery of the flexible display (400, 550),
wherein the blocking member (610, 810, 910) comprises an elevation (815, 915, 915a) formed from one surface of the blocking member (610, 810, 910) toward the front surface of the electronic device (10, 50, 50a, 50b, 50c, 101, 102, 104), in at least a part of a region where the fixing portion (621, 821, 921) is disposed,
**characterized in that**
the elevation (815, 915, 915a) covers the fixing portion (621, 821, 921).

2. The electronic device (10, 50, 50a, 50b, 50c, 101) of claim 1, wherein the fixing portion (621, 821, 921) is disposed to support the flexible display (400, 550), in at least a part of the periphery of a folding axis region of the flexible display (400, 550).

3. The electronic device (10, 50, 50a, 50b, 50c, 101) of claim 1, wherein the fixing portion (621, 821, 921) comprises,
a protrusion protruding in the direction which the front surface of the electronic device (10, 50, 50a, 50b, 50c, 101) faces, and contained at least in part in the blocking member (610, 810, 910), and
the blocking member (610, 810, 910) comprises:
a connection portion comprising an elastic material in a region containing at least a part of the protrusion unit (510a, 520a, 530a, 540a, 812, 912);
a first extension disposed to cover at least a part of an edge of the first portion (210a, 220a, 551), and extending from one end of the connection portion; and
a second extension disposed to cover at least a part of an edge of the second portion (210b, 220b, 552), and extending from an other end of the connection portion.

4. The electronic device (10, 50, 50a, 50b, 50c, 101) of claim 3, wherein the blocking member (610, 810, 910) comprises,
at least one opening (1234) formed in a direction in which the front surface of the electronic device (10, 50, 50a, 50b, 50c, 101) faces.

5. The electronic device (10, 50, 50a, 50b, 50c, 101) of claim 3, wherein the blocking member (610, 810, 910) comprises,
at least one groove concavely formed with at least a part of a longitudinal edge of the blocking member (610, 810, 910).

6. The electronic device (10, 50, 50a, 50b, 50c, 101) of claim 1, wherein the protection structure (60, 70a, 70b, 70c, 80, 90) further comprises:
a plate disposed to face one surface of the base (620, 720a, 820, 920); and
a support structure (1130, 1230, 1330) comprising at least one support disposed to support at least a part of the blocking member (610, 810, 910) between the base (620, 720a, 820, 920) and the blocking member (610, 810, 910).

7. The electronic device (10, 50, 50a, 50b, 50c, 101) of claim 6, wherein the at least one support is disposed in a space between the base (620, 720a, 820, 920) formed on one surface of the fixing portion (621, 821, 921) and the blocking member (610, 810, 910).

8. The electronic device (10, 50, 50a, 50b, 50c, 101) of claim 1, wherein the blocking member (610, 810, 910) is curved from the elevation (815, 915, 915a) to the one surface of the blocking member (610, 810, 910).

9. The electronic device (10, 50, 50a, 50b, 50c, 101) of claim 1, comprising:
a first decoration member (530) disposed on at least a part of the edge of the first portion (210a, 220a, 551) along the periphery of the first portion (210a, 220a, 551), in the first housing (510); and
a second decoration member (540) disposed on at least a part of the edge of the second portion (210b, 220b, 552) along the edge of the second portion (210b, 220b, 552), in the second housing (520).

10. The electronic device (10, 50, 50a, 50b, 50c, 101) of claim 9, wherein the first decoration member (530) and the second decoration member (540) are disposed to cover at least a part of the blocking member (610, 810, 910).

11. The electronic device (10, 50, 50a, 50b, 50c, 101) of claim 1, wherein the at least one protection structure (60, 70a, 70b, 70c, 80, 90) integrally couples at least a part of the fixing portion (621, 821, 921) of the base (620, 720a, 820, 920) with the blocking member (610, 810, 910) through insert injection.

## Patentansprüche

1. Elektronische Vorrichtung (10, 50, 50a, 50b, 50c, 101), umfassend:
eine Scharnierstruktur, die ein Scharniergehäuse (570) umfasst;
ein erstes Gehäuse (510), das mit der Scharnierstruktur verbunden ist;
ein zweites Gehäuse (520), das mit dem ersten Gehäuse (510) durch die Scharnierstruktur verbunden und eingerichtet ist, um sich in Bezug auf das erste Gehäuse (510) zu drehen;
ein flexibles Display (400, 550), das in dem ersten Gehäuse (510) mit einem ersten Abschnitt (210a, 220a, 551) angeordnet ist und in dem zweiten Gehäuse (520) mit einem zweiten Abschnitt (210b, 220b, 552) angeordnet ist; und
mindestens eine Schutzstruktur (60, 70a, 70b, 70c, 80, 90), die angeordnet ist, um mindestens einen Teil eines Umfangs des flexiblen Displays (400, 550) abzudecken,
wobei die mindestens eine Schutzstruktur (60, 70a, 70b, 70c, 80, 90) umfasst:
eine Basis (620, 720a, 820, 920), die auf dem Scharniergehäuse (570) angeordnet ist und einen Befestigungsabschnitt (621, 821, 921) umfasst, der in einer Richtung ausgebildet ist, in die eine Vorderfläche der elektronischen Vorrichtung (10, 50, 50a, 50b, 50c, 101) weist; und
ein Blockierelement (610, 810, 910), das mit mindestens einem Teil des Befestigungsabschnitts (621, 821, 921) einstückig ausgebildet ist und angeordnet ist, um mindestens einen Teil des Umfangs des flexiblen Displays (400, 550) abzudecken,
wobei das Blockierelement (610, 810, 910) eine Erhebung (815, 915, 915a) umfasst, die von einer Oberfläche des Blockierelements (610, 810, 910) zu der Vorderfläche der elektronischen Vorrichtung (10, 50, 50a, 50b, 50c, 101, 102, 104) hin in mindestens einem Teil eines Bereichs ausgebildet ist, in dem der Befestigungsabschnitt (621, 821, 921) angeordnet ist,
**dadurch gekennzeichnet, dass**
die Erhebung (815, 915, 915a) den Befestigungsabschnitt (621, 821, 921) abdeckt.

2. Elektronische Vorrichtung (10, 50, 50a, 50b, 50c, 101) nach Anspruch 1, wobei der Befestigungsabschnitt (621, 821, 921) angeordnet ist, um das flexible Display (400, 550) in mindestens einem Teil des Umfangs eines Faltachsenbereichs des flexiblen Displays (400, 550) zu stützen.

3. Elektronische Vorrichtung (10, 50, 50a, 50b, 50c, 101) nach Anspruch 1, wobei der Befestigungsabschnitt (621, 821, 921) einen Vorsprung umfasst,
der in die Richtung vorspringt, in die die Vorderfläche der elektronischen Vorrichtung (10, 50, 50a, 50b, 50c, 101) weist, und der zumindest teilweise in dem Blockierelement (610, 810, 910) enthalten ist, und
das Blockierelement (610, 810, 910) umfasst:
einen Verbindungsabschnitt, der ein elastisches Material in einem Bereich umfasst, der zumindest einen Teil der Vorsprungseinheit (510a, 520a, 530a, 540a, 812, 912) enthält;
eine erste Erweiterung, die angeordnet ist, um mindestens einen Teil einer Kante des ersten Abschnitts (210a, 220a, 551) abzudecken, und die sich von einem Ende des Verbindungsabschnitts erstreckt; und
eine zweite Erweiterung, die angeordnet ist, um mindestens einen Teil einer Kante des zweiten Abschnitts (210b, 220b, 552) abzudecken, und die sich von einem anderen Ende des Verbindungsabschnitts erstreckt.

4. Elektronische Vorrichtung (10, 50, 50a, 50b, 50c, 101) nach Anspruch 3, wobei das Blockierelement (610, 810, 910) mindestens eine Öffnung (1234) umfasst,
die in einer Richtung ausgebildet ist, in die die Vorderfläche der elektronischen Vorrichtung (10, 50, 50a, 50b, 50c, 101) weist.

5. Elektronische Vorrichtung (10, 50, 50a, 50b, 50c, 101) nach Anspruch 3, wobei das Blockierelement (610, 810, 910) mindestens eine Nut umfasst,
die mit mindestens einem Teil einer Längskante des Blockierelements (610, 810, 910) konkav ausgebildet ist.

6. Elektronische Vorrichtung (10, 50, 50a, 50b, 50c, 101) nach Anspruch 1, wobei die Schutzstruktur (60, 70a, 70b, 70c, 80, 90) ferner umfasst:
eine Platte, die angeordnet ist, um einer Oberfläche der Basis (620, 720a, 820, 920) zugewandt zu sein; und
eine Stützstruktur (1130, 1230, 1330), die mindestens eine Stütze umfasst, die angeordnet ist, um mindestens einen Teil des Blockierelements (610, 810, 910) zwischen der Basis (620, 720a, 820, 920) und dem Blockierelement (610, 810, 910) zu stützen.

7. Elektronische Vorrichtung (10, 50, 50a, 50b, 50c, 101) nach Anspruch 6, wobei die mindestens eine Stütze in einem Raum zwischen der Basis (620, 720a, 820, 920), die auf einer Oberfläche des Befestigungsabschnitts (621, 821, 921) ausgebildet ist, und dem Blockierelement (610, 810, 910) angeordnet ist.

8. Elektronische Vorrichtung (10, 50, 50a, 50b, 50c, 101) nach Anspruch 1, wobei das Blockierelement (610, 810, 910) von der Erhebung (815, 915, 915a) zu der einen Oberfläche des Blockierelements (610, 810, 910) gekrümmt ist.

9. Elektronische Vorrichtung (10, 50, 50a, 50b, 50c, 101) nach Anspruch 1, umfassend:
ein erstes Dekorationselement (530), das auf mindestens einem Teil der Kante des ersten Abschnitts (210a, 220a, 551) entlang des Umfangs des ersten Abschnitts (210a, 220a, 551) in dem ersten Gehäuse (510) angeordnet ist; und
ein zweites Dekorationselement (540), das auf mindestens einem Teil der Kante des zweiten Abschnitts (210b, 220b, 552) entlang der Kante des zweiten Abschnitts (210b, 220b, 552) in dem zweiten Gehäuse (520) angeordnet ist.

10. Elektronische Vorrichtung (10, 50, 50a, 50b, 50c, 101) nach Anspruch 9, wobei das erste Dekorationselement (530) und das zweite Dekorationselement (540) angeordnet sind, um mindestens einen Teil des Blockierelements (610, 810, 910) abzudecken.

11. Elektronische Vorrichtung (10, 50, 50a, 50b, 50c, 101) nach Anspruch 1, wobei die mindestens eine Schutzstruktur (60, 70a, 70b, 70c, 80, 90) mindestens einen Teil des Befestigungsabschnitts (621, 821, 921) der Basis (620, 720a, 820, 920) mit dem Blockierelement (610, 810, 910) durch Insert-Spritzgießen einstückig koppelt.

## Revendications

1. Dispositif électronique (10, 50, 50a, 50b, 50c, 101) comprenant :
une structure de charnière comprenant un boîtier de charnière (570) ;
un premier boîtier (510) relié à la structure de charnière ;
un second boîtier (520) relié au premier boîtier (510) par l'intermédiaire de la structure de charnière et configuré pour tourner par rapport au premier boîtier (510) ;
un écran souple (400, 550) disposé dans le premier boîtier (510) avec une première partie (210a, 220a, 551) et disposé dans le second boîtier (520) avec une seconde partie (210b, 220b, 552) ; et
au moins une structure de protection (60, 70a, 70b, 70c, 80, 90) disposée pour couvrir au moins une partie d'une périphérie de l'écran souple (400, 550),
dans lequel l'au moins une structure de protection (60, 70a, 70b, 70c, 80, 90) comprend :
une base (620, 720a, 820, 920) disposée sur le boîtier de charnière (570) et comprenant une partie de fixation (621, 821, 921) formée dans une direction dans laquelle une surface avant du dispositif électronique (10, 50, 50a, 50b, 50c, 101) fait face ; et
un élément de blocage (610, 810, 910) formé d'un seul tenant avec au moins une partie de la partie de fixation (621, 821, 921), et disposé pour couvrir au moins une partie de la périphérie de l'écran souple (400, 550),
dans lequel l'élément de blocage (610, 810, 910) comprend une élévation (815, 915, 915a) formée depuis une surface de l'élément de blocage (610, 810, 910) vers la surface avant du dispositif électronique (10, 50, 50a, 50b, 50c, 101, 102, 104), dans au moins une partie d'une région dans laquelle la partie de fixation (621, 821, 921) est disposée,
**caractérisé en ce que**
l'élévation (815, 915, 915a) couvre la partie de fixation (621, 821, 921).

2. Dispositif électronique (10, 50, 50a, 50b, 50c, 101) selon la revendication 1, dans lequel la partie de fixation (621, 821, 921) est disposée pour supporter l'écran souple (400, 550), dans au moins une partie de la périphérie d'une région d'axe de pliage de l'écran souple (400, 550).

3. Dispositif électronique (10, 50, 50a, 50b, 50c, 101) selon la revendication 1, dans lequel la partie de fixation (621, 821, 921) comprend,
une saillie faisant saillie dans la direction dans laquelle la surface avant du dispositif électronique (10, 50, 50a, 50b, 50c, 101) fait face, et contenue au moins en partie dans l'élément de blocage (610, 810, 910), et
l'élément de blocage (610, 810, 910) comprend :
une partie de connexion comprenant un matériau élastique dans une région contenant au moins une partie de l'unité de saillie (510a, 520a, 530a, 540a, 812, 912) ;
une première extension disposée pour couvrir au moins une partie d'un bord de la première partie (210a, 220a, 551), et s'étendant depuis une extrémité de la partie de connexion ; et
une seconde extension disposée pour couvrir au moins une partie d'un bord de la seconde partie (210b, 220b, 552), et s'étendant depuis une autre extrémité de la partie de connexion.

4. Dispositif électronique (10, 50, 50a, 50b, 50c, 101) selon la revendication 3, dans lequel l'élément de blocage (610, 810, 910) comprend,
au moins une ouverture (1234) formée dans une direction dans laquelle la surface avant du dispositif électronique (10, 50, 50a, 50b, 50c, 101) fait face.

5. Dispositif électronique (10, 50, 50a, 50b, 50c, 101) selon la revendication 3, dans lequel l'élément de blocage (610, 810, 910) comprend,
au moins une rainure formée de manière concave avec au moins une partie d'un bord longitudinal de l'élément de blocage (610, 810, 910).

6. Dispositif électronique (10, 50, 50a, 50b, 50c, 101) selon la revendication 1, dans lequel la structure de protection (60, 70a, 70b, 70c, 80, 90) comprend en outre :
une plaque disposée pour faire face à une surface de la base (620, 720a, 820, 920) ; et
une structure de support (1130, 1230, 1330) comprenant au moins un support disposé pour supporter au moins une partie de l'élément de blocage (610, 810, 910) entre la base (620, 720a, 820, 920) et l'élément de blocage (610, 810, 910).

7. Dispositif électronique (10, 50, 50a, 50b, 50c, 101) selon la revendication 6, dans lequel l'au moins un support est disposé dans un espace entre la base (620, 720a, 820, 920) formée sur une surface de la partie de fixation (621, 821, 921) et l'élément de blocage (610, 810, 910).

8. Dispositif électronique (10, 50, 50a, 50b, 50c, 101) selon la revendication 1, dans lequel l'élément de blocage (610, 810, 910) est incurvé depuis l'élévation (815, 915, 915a) jusqu'à l'une surface de l'élément de blocage (610, 810, 910).

9. Dispositif électronique (10, 50, 50a, 50b, 50c, 101) selon la revendication 1, comprenant :
un premier élément de décoration (530) disposé sur au moins une partie du bord de la première partie (210a, 220a, 551) le long de la périphérie de la première partie (210a, 220a, 551), dans le premier boîtier (510) ; et
un second élément de décoration (540) disposé sur au moins une partie du bord de la seconde partie (210b, 220b, 552) le long du bord de la seconde partie (210b, 220b, 552), dans le second boîtier (520).

10. Dispositif électronique (10, 50, 50a, 50b, 50c, 101) selon la revendication 9, dans lequel le premier élément de décoration (530) et le second élément de décoration (540) sont disposés pour couvrir au moins une partie de l'élément de blocage (610, 810, 910).

11. Dispositif électronique (10, 50, 50a, 50b, 50c, 101) selon la revendication 1, dans lequel l'au moins une structure de protection (60, 70a, 70b, 70c, 80, 90) couple d'un seul tenant au moins une partie de la partie de fixation (621, 821, 921) de la base (620, 720a, 820, 920) avec l'élément de blocage (610, 810, 910) par moulage par insertion.
